# EUROPEAN PATENT APPLICATION

(11) **EP 4 465 243 A1**
(43) Date of publication of application: **20.11.2024**
(21) Application number: 24172969.8
(22) Date of filing: 29.04.2024
(51) Int. Cl.: G06T 15/06, G06T 17/00

(54) **TRIANGLE PAIRING OPTIMIZER**

(30) Priority: 19.05.2023 GB 202307538
(71) Applicant: Imagination Technologies Limited, Kings Langley Hertfordshire WD4 8LZ (GB)
(72) Inventor: AMAN, Aytek, Kings Langley, WD4 8LZ (GB); FENNEY, Simon, Kings Langley, WD4 8LZ (GB)
(74) Representative: Page White Farrer

(57) **Abstract**

A method for grouping primitives into pairs of adjoining triangles for use in a ray tracing process. An input list of edges of triangular primitives is obtained, an edge bounding volume surface area (BVSA) and an additional edge qualifier is determined for each of the edges. The entries in the input list are sorted by edge BVSA then by edge qualifier, giving a sorted list in which the entries have a sorted order. The list is traversed in the sorted order to seek groups of matched edges within a predetermined window of list entries, each edge in a matched group having a matching edge BVSA and edge qualifier with another edge in the matched group from a different triangular primitive. When a group of matched edges is found, associated triangular primitives are designated as a cluster of adjoining primitives. The cluster of adjoining primitives are processed together as a group.

## Description

### TECHNICAL FIELD

The present disclosure relates to testing whether a ray intersects a triangular primitive in ray tracing.

### BACKGROUND

In graphics processing, a surface in a modelled environment, such as the surface of an object, can be modelled as a mesh of triangular primitives. Ray tracing can then be performed to determine whether a ray of light in the modelled environment would strike each of the primitives, and if so determine how to render the primitive (or part thereof) accordingly.

Ray tracing refers to a graphics processing technique for generating an image by tracing a path of light through a modelled environment and simulating the effects of its encounters with surfaces along the way. Modelled rays of light are traced from a modelled source to a modelled view point (forward ray tracing) or vice versa backwards from the modelled view point to the modelled source (i.e. reverse ray tracing, which is typically more efficient as forward ray tracing often results in processing rays whose trajectory ultimately never hits the viewpoint). A ray may be described by coordinates of an origin of the ray, a vector specifying the direction of the ray, a maximum and minimum extent of the ray along that vector, and optionally a ray colour. Ray tracing begins by casting rays out into the modelled environment, from each pixel in the image in the case of reverse ray tracing. Surfaces with which rays may interact in the modelled environment are divided into geometric primitives, typically triangular primitives. For each ray, the ray tracing comprises finding the closest geometric primitive (if any) with which the ray interacts. When an incident ray intersects it can then either terminate, reflect or refract. A reflection or refraction introduces one or more secondary rays with a new direction relative to the incident ray, which is terminated (i.e. the reflected or refracted ray is modelled as a new ray). The secondary rays may also accumulate a new value (colour) relative to the incident ray.

An application-specific processor, such as a graphics processing unit (GPU), can be tailored to a specific application by including one or more dedicated hardware modules for performing one or more specific types of operation in fixed-function hardware circuitry. Such hardware may be invoked for example by one or more specialised instruction types in the instruction set of the processor, or by writing to dedicated registers or to a buffer in a dedicated region of memory, or such like, depending on the design of the processor. Alternativley or additionally, graphics processing operations can be performed in software sing general-purpose instructions. Such software may take the form of application-level software or firmware, or a combination.

Ray tracing may be performed in software or in dedicated hardware, or in a combination of these. For example in one GPU design, driver software run on the GPU forms a "bounding volume hierarchy" (BVH) which is a data structure that divides a modelled environment into hierarchical regions for search purposes. The driver software writes this data structure to a dedicated buffer in memory. A dedicated "traversal unit" implemented in hardware is arranged to then use the BVH to detect whether various modelled rays (originating from the application software and written to another dedicated region of memory called the ray buffer) would intersect with geometric primitives in the modelled environment.

A bounding volume hierarchy (BVH) is a type of data structure that is used in ray traversal. The data structure of the BVH takes the form of a tree structure, in which nodes represent regions of space (typically boxes) in a modelled environment, and an edge from parent node to child node represents that the region represented by the child node is nested within the region represented by the parent. The nodes are thus arranged in hierarchical levels from a root node down to a leaf node at the lowest level of each branch. The region of space represented by each leaf node contains a respective one or more geometric primitives or at least part of a geometric primitive. For example a simple way to form a BVH is to divide the modelled environment in half, and then divide each half in half again, etc., down to the smallest subdivisions as represented by the leaf nodes. However, the efficiency of searching the tree of the BVH depends on the way the modelled region of space is split between the different nodes of the tree, so more sophisticated approaches may be used to divide the space in a different way than just half and half again.

The BVH is used in ray tracing to search for geometric primitives with which a modelled ray intersects. The search comprises first determining which node the ray would traverse at the first level down from the root, and then determining which of that node's children the ray would intersect, and so forth, until the search ends with finding a leaf node traversed by the ray and determining whether the ray intersects with the primitive or any of the primitives contained within that leaf node. Other acceleration structures can also be used, e.g. regular grids or k-d trees, which are not necessarily based on forming axis-aligned bounding boxes exactly fitted around the extremities of the primitives. Further, BVHs with other bounding volumes (e.g. spheres) have been used.

### SUMMARY

When determining whether a ray intersects a primitive, there are at least three reasons why it may be desirable to group the primitives into pairs of adjoining triangles (i.e. that are adjacent with one another in the mesh).

The first is that when performing the ray vs. triangle-pair intersection tests, the calculations relating to the common edge can be reused in the evaluation. In order to test whether a ray intersects a triangular primitive, it is necessary to determine which side of each of the triangle's three edges of the ray falls. If two adjacent triangles are paired together when performing this test, then it is possible to share some of the computation involved in testing their adjoining edges.. To illustrate, say triangle A has edges A1, A2, A3 and triangle 2 has edges B1, B2, B3; and that A1 adjoins B2 in the mesh (in effect they are the same edge geometrically speaking, having the same vertices). Determining whether the ray falls one side of edge A1 is the same as determining whether the ray falls the other side of B2. Thus by pairing triangles it is possible to perform only five edge tests instead of six for every two triangles tested in this way.

The second reason lies in the search that is performed using the bounding volume hierarchy (BVH). A BVH divides the modelled environment into recursive spatial units, represented as nodes in the tree of the BVH data structure. I.e. a child node in the tree represents a subdivision of the volume represented by its parent. To search for a primitive that intersects with a ray, the search traverses the tree from top to bottom until it finds a leaf node (or nodes) representing a bounding box (or boxes) that the ray intersects with. It is then necessary to determine whether the ray actually intersects with a primitive within that box. A bounding box that encompasses two adjacent triangles in the mesh is often not much bigger than a bounding box that encompasses only a single triangle. Therefore it can often be more efficient to include a pair of adjoining triangles within a single leaf node than have an individual bounding box for each leaf node. E.g. Bounding Volume Hierarchies, BVHs, generally use bounding volumes such as Axis Aligned Bounding Boxes, AABBs. The AABB for a contiguous pair of triangles is rarely much larger than either of the two AABBs of the constituent triangles. Treating them as a pair will thus usually reduce BVH footprint, traversal depth, and AABB testing effort.

The third reason is that a triangle pair can be stored more compactly than two individual triangles, which can save memory bandwidth and increase cache utilisation. If two adjacent triangles are stored in terms of each of their three vertices {A, B, C} and {B, C, D} then two of the vertices (those of the adjoining edge) are duplicated in storage. However if they are stored as a pair then they can be stored in terms of just four vertices {A, B, C, D} instead of six.

These concepts could be extended to small clusters adjoining triangles, each cluster comprising two or more pairs. E.g. a cluster of three triangles could comprise either: two pairs where one shared triangle is a member of both pairs, but the other two are only paired with the shared triangle; or three pairs where each triangle is a member of two pairs, each being paired with each of the other two. It would also be possible to use such clusters to obtain any or all of the above-described benefits. For instance it would be possible to cluster three or more triangles into a leaf node of a BVH for search purposes; or in the case of a cluster of three triangles forming two pairs, a dual triangle tester could be used to test a ray against seven edges instead of nine (or for a cluster of three triangles forming three pairs, six edge tests instead of nine).

An issue however is trying to find suitable pairs of triangles to pair (or cluster) together in this manner. The list of triangular primitives in a given mesh will typically be received from the application (e.g. game) in whatever order the application happens to choose. It would not be computationally practical to compare every edge of every triangle with every edge of every other triangle, so a more practical algorithm needs to be found. A simple approach would be just to traverse the received list of triangles in the received order, and with each triangle as encountered when traversing the list, determine whether any other triangles within a certain search window down the list from the current triangle have a matching edge. However the received order will not likely be optimal for searching for matching edges, and not many matches may be found, or not many good matches (e.g. not many matches that improve the efficiency of the BVH search compared to simply using a single primitive per leaf node).

The present disclosure provides a more sophisticated method which provides, on average, a larger number of better matches than a simple window-based search based on the received order.

According to one aspect disclosed herein, there is provided a method comprising: obtaining an input list in which list entries represent edges of triangular primitives forming a mesh modelling at least part of a surface in a virtual environment, at least one of the edges of each of the triangular primitives adjoining with a respective one of the edges of another of the triangular primitives in the mesh; determining an edge BVSA, bounding volume surface area, of each of the edges; determining an additional edge qualifier of each of the edges; sorting the entries in the input list by edge BVSA then by edge qualifier, thereby resulting in a sorted list in which the entries have a sorted order from an entry representing an edge with greatest edge BVSA to an entry representing an edge with lowest edge BVSA; traversing the list in the sorted order seeking groups of matched edges within a predetermined window of list entries of one another in the sorted order, each edge in a matched group having a matching edge BVSA and matching edge qualifier with another of the edges in the matched group from a different triangular primitive, wherein each time a group of matched edges is found whose triangular primitives have not yet been designated as part of a cluster of adjoining primitives, designating the triangular primitives of the matched edges in the group of matched edges as a cluster of adjoining primitives; and for each of the designated clusters of adjoining primitives, processing the cluster of adjoining primitives together as a group as part of a ray tracing process performed in software and/or hardware on a graphics processing unit.

Processing a cluster of adjoining primitives together as a group as part of a ray tracing process may comprise: i) testing a ray against a triangle cluster, i.e. testing whether a ray intersects with the cluster (e.g. pair); and/or ii) in a buffer while awaiting testing against a ray, storing the cluster in a compressed form compared to storing the triangular primitives individually.

In embodiments the edge BVSA are edge BBSAs, bounding box surface areas. However it is not excluded that other forms of bounding volume could be used, e.g. spheres, or tessellating polyhedrons other than cuboid boxes.

In embodiments, each group of matched edges may comprise a pair of the edges, and each cluster of adjoining primitives may comprise a pair of the triangular primitives.

In embodiments, each group of matched edges may comprise more than two of the edges, and each designated cluster may comprise more than two of the triangular primitives.

In embodiments, the sorted order may be from an entry at the top of list representing an edge with greatest edge BVSA to edge at the bottom of list representing an edge with lowest edge BVSA; and the traversing comprises traversing the sorted list from the top entry to the bottom entry, and for each as-yet unmatched edge currently-encountered in the traversing of the list, determining whether there exists another edge within the predetermined window of list entries down the sorted order that has matching edge BVSA and matching edge qualifier, and which is not from the same triangular primitive as the currently-encountered edge and which is not-yet matched as part of one of the matched groups, and if so matching the currently-encountered edge to the other edge to the other edge as one of the matched groups or part of one of the matched groups.

In embodiments, the predetermined window may be the next entry down sorted list in the sorted order.

In embodiments, the predetermined window may be larger than one list entry; and the method may further comprise, when a number of candidate matching edges is found within the predetermined window that is greater than a maximum membership for a matched group, performing a comparison to select among said greater number of candidate matching edges to include in one of the matched groups, the comparison comprising: for each of a plurality of candidate subsets of said greater number of matching edges, determining a joint BVSA of the edges in the candidate subset, and selecting, as said one of the matched groups, the subset with the lowest total edge BVSA.

In embodiments, the edge qualifier may be unique to any given pair of adjoining pair edges.

In embodiments, the edge qualifier of each edge may comprise an identifier of a first vertex of the edge and an identifier of the second vertex of the edge, and the sorting by edge qualifier comprises sorting by first vertex identifier then by second vertex identifier, the edge qualifiers matching when both the first and second vertex identifiers match.

In embodiments, the edge qualifier of each edge may comprise coordinates of a midpoint of the edge, or a hash of coordinates of the midpoint or vertices of the edge.

In embodiments, for each designated cluster, the processing of the adjoining primitives together may comprise using a dual triangle tester to test whether a ray intersects with each of the triangular primitives in the cluster, wherein the dual triangle tester uses an at-least-partially shared calculation to determine which side of an adjoining edge a ray falls.

In embodiments, for each designated cluster, the processing of the adjoining primitives together may comprise including the triangular primitives of the designated cluster in a same leaf node of a bounding volume hierarchy searched to determine whether a ray intersects with any of the triangular primitives in the cluster.

In embodiments, for each designated cluster, the processing of the adjoining primitives together may comprise in a buffer while awaiting testing against a ray, storing the cluster in a compressed form compared to storing the triangular primitives individually.

In embodiments, the method comprise causing the modelled environment to be rendered on a display device, including illumination based on the ray tracing.

However the disclosure is not limited in this respect. For example the techniques disclosed herein are also applicable to other acceleration structures for searching for a ray traversal, e.g. k-d trees, regular grids or voxels. More generally the aim is grouping triangle pairs and once that is done, one could use any means of searching for a ray intersection.

According to another aspect disclosed herein, there is provided graphics processing system configured to perform the method of any embodiment disclosed herein.

The graphics processing system may be implemented in hardware (ether fixed-function circuitry, or configurable or reconfigurable circuitry such as a PGA or FPGA), or in software stored on one or more memory units and arranged to run on one or more processing units, or in any combination of hardware and software. The graphics processing system may be described as comprising an interface configured to perform the receiving; an edge sorting module configured to perform the determining and sorting; a triangle pairing module configured to perform the traversing, matching and designation; and one or more graphics processing modules configured to perform the processing.

The graphics processing system may be embodied in hardware on an integrated circuit. There may be provided a method of manufacturing, at an integrated circuit manufacturing system, a graphics processing system. There may be provided an integrated circuit definition dataset that, when processed in an integrated circuit manufacturing system, configures the system to manufacture a graphics processing system. There may be provided a non-transitory computer readable storage medium having stored thereon a computer readable description of a graphics processing system that, when processed in an integrated circuit manufacturing system, causes the integrated circuit manufacturing system to manufacture an integrated circuit embodying a graphics processing system.

There may be provided an integrated circuit manufacturing system comprising: a non-transitory computer readable storage medium having stored thereon a computer readable description of the graphics processing system; a layout processing system configured to process the computer readable description so as to generate a circuit layout description of an integrated circuit embodying the graphics processing system; and an integrated circuit generation system configured to manufacture the graphics processing system according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

This Summary is provided merely to illustrate some of the concepts disclosed herein and possible implementations thereof. Not everything recited in the Summary section is necessarily intended to be limiting on the scope of the disclosure. Rather, the scope of the present disclosure is limited only by the claims.

### BRIEF DESCRIPTION OF THE DRAWINGS

Examples will now be described in detail with reference to the accompanying drawings in which:
Figure 1 shows an example of a computing system in which the presently disclosed techniques may be implemented;
Figure 2 shows a triangle pairer and triangle tester for use in ray tracing;
Figure 3 shows an example of mesh formed from triangular primitives, labelling vertices of the triangles with vertex indices;
Figure 4 shows an exploded view of the triangles of Figure 3, labelling the triangles themselves with triangle indices;
Figure 5a shows an axis aligned binding box (AABB) around an example of a triangular primitive;
Figure 5b shows an axis aligned bounding box around one of the edges of the triangle of Figure 5a;
Figure 5c shows an axis aligned bounding box around an example pair of triangles including the triangle of Figure 5a;
Figure 6a shows an input list of the edges of an example set of triangular primitives in a mesh or portion of a mesh,
Figure 6b shows a sorted list produced by sorting the input list of Figure 6b;
Figure 6c shows an example pairing of triangles performed using the sorted list of Figure 6b;
Figure 7 shows an example of a tree representing a bounding volume hierarchy (BVH);
Figure 8 shows another example of an axis aligned bounding box around a triangular primitive;
Figure 9 shows an example computer system in which a graphics processing system is implemented; and
Figure 10 shows an integrated circuit manufacturing system for generating an integrated circuit embodying a graphics processing system; and
Figure 11 is a flow chart of a method of pairing triangles.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

It would be desirable to pair triangular primitives for the purpose of ray tracing. For example, ray-tracing may employ a dual triangle tester unit which can perform two triangle tests in parallel given that triangles share an edge. However, practically speaking, neighbouring triangles can only be found if they are within a small search window in the input order. Most models are laid out in such a way that number of triangle pairs are either low or/and the paired triangles result in lots of empty space in the AABB of the pair. The present disclosure provides a method of globally pairing the triangles in a way that number of pairs are maximized while keeping the AABBs of these pairs as small as possible.

The half edges in the mesh are sorted by using their bounding box surface area and indices (or other such identifying qualifier of the edges). After sorting, edge-twins together will be found sorted by bounding box surface area, which is the disclosed pairing quality metric. The method then iterates over this list, reads incident triangle indices and generate pairs.

The disclosed method can be employed to provide any one or more of the following benefits compared to a simple window-based search based on the unsorted input order.
- It increases the utilization of the dual triangle tester unit (DTTU). Due to its global and greedy nature, it can increase number of triangle pairs considerably while keeping their AABBs as compact as possible. This, in turn, boosts "Mega Rays per Second" (MRPS) considerably, e.g. 7-8 % (where the MRPS is the number of rays that can be processed per second, which is an indicator or ray tracing performance); whereas window-based search does not provide any meaningful impact on performance.
- It reduces the number of box and triangle tests.
- It reduces the memory footprint of the accelerator.
- It is fast and can be parallelized easily on CPU and GPU as it relies solely on sorting.

The disclosed method thus provides inexpensive and effective means to identify pairs of triangles without analysing the actual geometry of the triangles (e.g. areas and orientations) themselves - only by computing a metric score of each edge and then sorting.

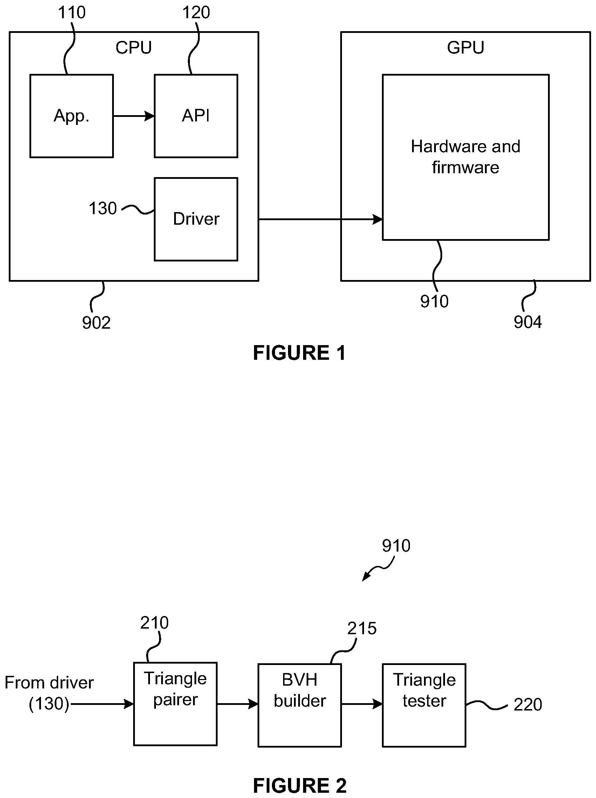

More details will now be discussed with reference to Figures 1 to 10.

Figure 1 gives a schematic block diagram of a computing system in which, in embodiments, the techniques disclosed herein may be implemented. The computing system comprises a host CPU (central processing unit) 902 coupled to a GPU (graphics processing unit) 904. The CPU is arranged to run host software comprising an application 110 and also an API (application programming interface) 120 and driver 130. This software may be stored in internal memory of the CPU 902 or in an external store, or a combination. Either way, the host software is arranged to run on one or more execution units of the CPU 902 in order to perform the described functions. The GPU 904 comprises a processing block comprising graphics processing logic 910. The graphics processing logic 910 may be implemented in fixed-function hardware, i.e. dedicated circuitry; or in reconfigurable circuitry such as a PGA or FPGA; or in software run on the GPU software; or in any combination of dedicated circuity, configurable/reconfigurable circuitry and/or GPU software. The GPU software may be stored in internal memory of the GPU 904, or in an external store, or a combination. Either way, the GPU software is arranged to run on one or more execution units of the GPU 904 in order to perform the described functionality. The GPU software may comprise low-level software that may be described as firmware.

In operation, the application 110 running on the host CPU 901 interfaces to the API 120 (such as Vulkan, OpenGL or DirextX, also running on the host CPU), and the API 120 then interfaces with GPU driver software 130 (also running on the host CPU), and ultimately the GPU driver software 130 interfaces with the GPU hardware/firmware

The application 110 (e.g. a game) generates at least one mesh modelling a surface in a virtual environment. E.g. the mesh may model the surface of an object having an enclosed interior such as a ball, car, weapon, etc.; or a constituent surface of such an object Alternatively the modelled surface may comprise another, non-enclosed form of surface or a surface forming a bound of the environment such as a floor, the ground or a road; or a wall or ceiling, etc.; or a constituent surface of any such surface. Note that a mesh as referred to herein doesn't necessarily limit to a mesh modelling an entire object or surface, nor indeed the entire environment - a larger mesh could be divided into smaller, constituent meshes for processing and the mesh as referred to herein could be a constituent mesh modelling a constituent surface that is part of a wider surface in the virtual environment.

The application outputs the mesh from the CPU 902 to the GPU 904 via the API 120 and the driver 130. The mesh is output to the GPU 904 in the form of a list of the triangular primitives defined in terms of their vertices. The triangles may each also be assigned a respective triangle index, and the vertices may each be assigned a respective vertex index. The indices many be generated by the application and the list as output to the GPU 904 may take the form of a list of the vertex indices, comprising three indices per triangle (therefore list will have N * 3 indices where N is number of triangles). The list is received by the GPU 904 and supplied as an input to the graphics processing logic 910.

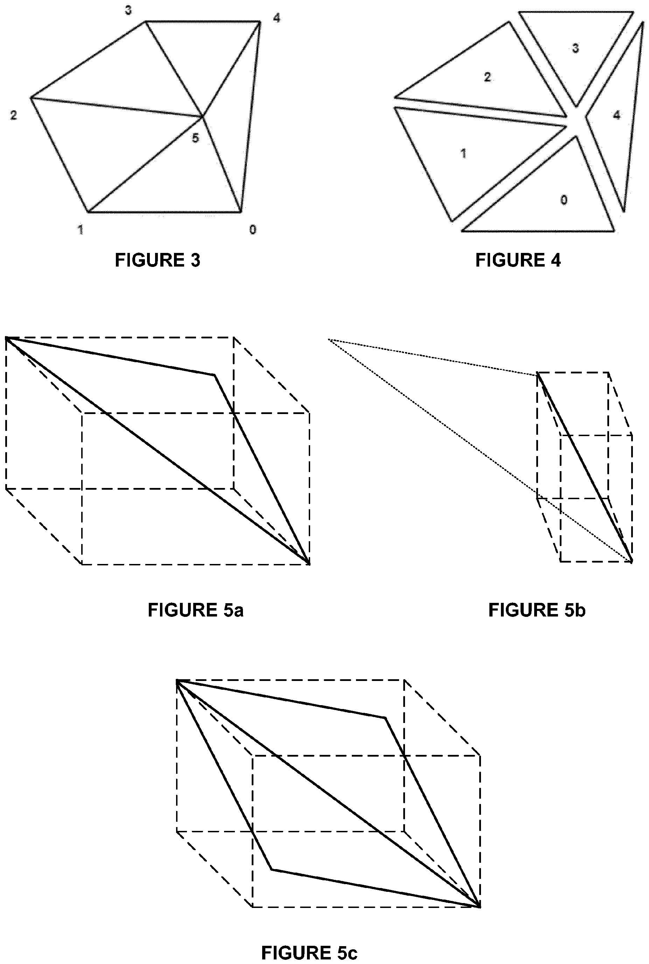

Figures 3 and 4 give an example of a small mesh comprising five interlocking triangular primitives. In practice there would likely be many more triangles in a given mesh, but the example shown is just for illustrative purposes. Note also that triangular primitives may be referred to herein just as triangles as a short-hand. Figure 3 shows the mesh with indices of the vertices labelled. Figure 4 shows an exploded view of the individual triangles, labelling the indices of the triangles as opposed to the vertices. An edge can be defined by a pair of vertices (and a direction defining which is the inside and which is the outside of the edge). A triangle of a given index can be defined by reference to the indices of three edges. The indices of the edges and the indices of the triangles may be generated by the application 110 and supplied as part of the list of triangles from the application 110 via the API 120. Alternatively it is not excluded that the indices could be added by the API 120 or driver 130, or in the GPU 902 by the graphics processing logic 910 or elsewhere.

Figure 2 gives a schematic block diagram showing more detail of part of the graphics processing logic 910. The processing logic 910 comprises ray-tracing logic (implemented in software, hardware or a combination, as discussed previously) including a triangle pairer 210, a BVH builder 215 and a triangle tester 220 operatively coupled to the triangle pairer. It will be appreciated that the graphics processing logic of a GPU may comprise many more components, but Figure 2 focusses on the components most relevant to the present disclosure. The triangle pairer 210 receives the list of triangles in the mesh from the application 110 (via the API 120 and driver 130) and from that, determines pairs of adjoining triangles according to the novel method to be discussed in more detail shortly. The triangle pairer 210 outputs the paired triangles (and any triangles that couldn't be paired) to the BVH builder 215. The BVH builder 215 comprises memory (e.g. RAM) which stores the triangles including the pairs received from the pairer 210. The BVH builder 215 also comprises logic which forms a BVH data structure overlaid on the stored triangles. The triangle tester 220 retrieves an indication of the paired triangles from the memory of the BVH builder 215, and for each pair processes the two triangles together as a pair. The function of the processing by the triangle tester 220 is to test whether a ray intersects any of the triangles in the mesh as part of a ray tracing process (and this may be repeated over many rays illuminating the modelled environment). If so, the triangle (or at least part of it) will then be rendered for display on a display device by further components (not shown) of the ray tracing logic 910 according to the properties of the triangle and the intersecting ray. In embodiments the triangle tester 220 may be implemented as a dedicated hardware module (i.e. in fixed function circuitry) and the triangle pairer 210 may be implemented in software. However more generally, any module 210, 215, 220 could be implemented dedicated hardware, or in software, or configurable or reconfigurable circuity (e.g. PGA or FPGA), or any combination of dedicated hardware, reconfigurable circuitry and/or software.

It is useful to group triangles into adjacent pairs for processing by the triangle tester 220 for any or all of at least three reasons, as follows.

The first reason is that the triangle tester 220 may comprise a dual triangle tester (in embodiments a dedicated hardware module, though in principle it could instead be implemented partially or wholly in software). This enables a saving in the calculations done in the ray-triangle tester 220 for the shared edge shared between the two tested triangles. To test whether a ray intersects a triangular primitive, the triangle tester 220 projects the triangle vertices onto the 2D plane that is orthogonal to the ray direction. Then, intersection computations are carried out in this 2D plane to determine whether the ray intersects the triangle. This involves checking which side of each of the triangle's three edges the ray falls. If two triangles are tested individually, the tester 220 has to test six edges; but if it comprises a dual tester arranged to test an adjacent pair together, then it only needs to test the adjoining edge once, so only needs to check five edges.

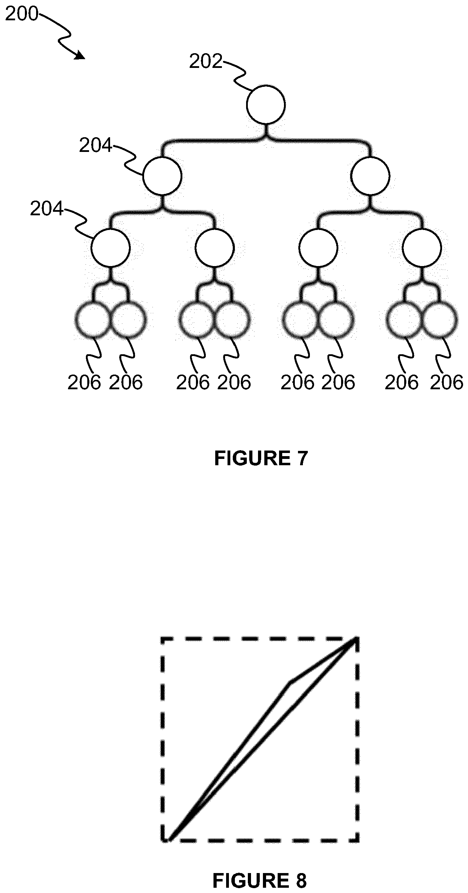

The second reason relates to the BVH (bounding volume hierarchy) that is used to search the modelled environment for any primitives intersected by the ray. Figure 7 illustrates, by way of example, the concept of a bounding volume hierarchy (BVH) 200. The BVH comprises a data structure arranged as a tree, in which the nodes are arranged in hierarchical levels or layers, from a plurality of leaf nodes 206, through one or more levels of internal nodes (204), up to a root node (202). The root node 202 and each internal node 204 (i.e. each node but the leaf nodes 206) are each parents of a respective one or more child nodes, the respective child nodes being either other internal nodes 204 or leaf nodes 206. The root node 202 is only a parent, not a child; and the leaf nodes 206 are only children, not parents. In a binary tree, the root node 202 and each internal node 204 (each node but the leaves) each has exactly two children, though more generally the tree need not be binary. Note also that referring to the tree being arranged in level or layers herein does not imply all the leaf nodes 206 must be at the same depth in the tree. In practice BVHs will often be unbalanced and have leaves 206 at different depths.

Each node 202, 204, 206 represents (models) a different respective volume of space - a so-called bounding volume, i.e. a 3D region of space - in a modelled environment. The volume represented by each leaf node 206 encompasses at least one respective geometric primitive or part of a respective geometric primitive. The root 202 typically represents the whole environment. An edge from child to parent represents that the volume of space represented by the child is contained (nested) within the region represented by the parent. Going down the tree from root to leaves, each internal node 204 represents a smaller region of space nested within its parent, until the tree reaches the smallest level of bounding volume at the leaf nodes. The bounding volumes are typically boxes (cuboids), usually axis aligned bounding boxes (AABBs). However other bounding volume shapes could be used, e.g. other forms of tessellating or non-tessellating polyhedrons, or spheres. The description herein may refer to boxes by way of example but it will be appreciated this is not limiting and any reference to a box herein could more generally be replaced with reference to a volume.

In order to form the BVH in the first place, the BVH builder 215 determines the bounds of the bounding boxes to be represented by the different nodes 204, 206 in the BVH 200. A simple way is just to divide the space in half, then divide each half in half again, etc.; for example either by dividing the space in half by distance along a certain axis such as the x-axis, or by dividing either side of the median coordinate along a certain axis such as the x-axis using the x coordinates of the primitives' centroids (in other words, divide the space such that half the primitive centroids fall one side of the division, and the other half of the primitive centroids fall the other side). More sophisticated approaches may also be used which apportion the bounding boxes unevenly based on a "surface area heuristic" (SAH) so as to optimize the computational efficiency of searching the BVH. Methods of forming BVHs are, in themselves, known in the art.

Whatever scheme is used to form the BVH, the 3D space of the modelled environment is thus divided into increasingly fine subdivisions, typically boxes, which are described as nodes in a tree (conventionally a binary tree), down to the leaves of the tree which represent the smallest level of subdivision in the hierarchy. In general, depending on the particular scheme being used and the particular geometry being modelled, the bounding volume represented by a given leaf node 206 could encompass exactly one geometric primitive, more than one geometric primitive, or a part (fraction) of a geometric primitive. For example, a certain scheme might have a threshold on the number of primitives a leaf node 206 can contain.

Figure 5a illustrates the concept of a bounding box around an example of a single triangular primitive. Such a bounding box could correspond to a leaf node of the BVH in one example. Figure 5b also shows the concept of a bounding box around an individual edge of the example triangle of Figure 5a, the significance of which will become apparent shortly. The type of bounding box used in such applications is typically an axis aligned bounding box (AABB), which just means that the bounding box is aligned with the coordinate axes, e.g. not rotated. In other words, the sides of the bounding box are aligned with the coordinate system being used (which is the same coordinate system used to define the coordinates of the triangle vertices, for example).

Once formed, a BVH provides a way of searching a volume of space in a modelled environment for intersections between a ray and a geometric primitive. To determine which primitives a given ray intersects with, the triangle tester 220 (a component of a wider unit known as the ray traversal unit, not shown separately) first determines which bounding box(es) at the top level of the tree the ray intersects with, then within that/those box(es) determines which box(es) at the next level down the ray intersects with, and so forth. This is more efficient than just comparing every primitive against the ray. Note that the procedure doesn't necessarily just stop at the first box the ray intersects with (i.e. it is not assumed that one box is occluded by the other), as a ray could hit a box but still miss all the primitives within that box.

At the leaf level, the triangle tester 220 checks whether the ray falls in the bounding box of the leaf node, and then if it does, checks whether the ray strikes a triangle within the bounding box. A bounding box that encompasses two adjacent triangles is often not much bigger than a bounding box that encompasses only one of the triangles. Figure 5c illustrates an example of how an axis aligned bounding box (AABB) formed around a pair of adjoining triangles can be not much bigger, or even the same, as the bounding box formed around one of them individually (c.f. Figure 5a). Therefore it can be more efficient to have a pair of adjoining triangles per leaf node than a separate leaf node for each triangle. To understand this, first consider the situation if two triangles are not paired, and assume they have similar bounding boxes. In this case it will be necessary to perform two box tests. Then, since the ray will hit both boxes, the triangle test will have to be run twice, once for each box. On the other hand if the triangles are paired, then it will only be necessary to do one box test and (if dual triangle testing is employed) one dual triangle test.

However, the applicability of the present disclosure is not limited to BVHs and other data structures for searching for a ray intersection can be used, e.g. a k-d tree or regular grid.

A third reason to group triangles into adjacent pairs is storage. A triangle pair can be stored more compactly in the memory of the BVH builder 215 than two individual triangles, which can save memory bandwidth and increase cache utilisation. If two adjacent triangles are stored in terms of each of their three vertices {A, B, C} and {B, C, D} then two of the vertices (those of the adjoining edge) are duplicated in storage. However if they are stored as a pair then they can be stored in terms of just four vertices {A, B, C, D} instead of six. I.e. the representation of the two triangles can be compressed by storing the shared edge {B, C} only once instead of duplicating it, which would be required if the triangles were simply stored separately.

For any or all of the above reasons, it would be desirable to pair together triangles in a mesh for joint processing by the triangle tester 220 (comprised by the ray traversal unit).

Checking whether two triangles adjoin in the mesh amounts to checking whether they share two common vertices (which means they have a common edge). However it would not be practical to check every edge of every triangle in the mesh against one another. So some form of algorithm is required to determine which edges to compare with one another. This is implemented in the triangle pairer 210.

The triangles are received from the application 110 (e.g. game) in some order determined by the application, e.g. in order of index. Most applications would typically (though not necessarily) tend to place adjacent triangles next to one another in the received order (likely if they are optimized for rasterization). So in one simple triangle-pairing algorithm, then for each triangle as it is received, the pairer 220 could just check whether there is a geometrically adjoining, as-yet-unpaired triangle within a certain search window in the received order (e.g. the search "window" could just be the last received triangle or the next triangle index in the order, i.e. for each triangle as it is received or each triangle as the algorithm traverses down the list in order of index, check whether the last received triangle or the next one down the list in order of index is already paired and if not whether it adjoins the present one). However the inventors have found that this does not result in the most optimal pairings on average. Worse, with some models it often fails to find very many pairs at all: a triangle can be paired only with one of its three neighbours, but if these neighbours are scattered around in the input list, the basic window-based approach would fail to pair especially if the window is small. For instance, the inventors have encountered models from some applications that have been originally constructed from quadrilaterals, e.g. Q1, Q2 ... On, each of which have then been converted into a pair of triangles, e.g. Qi => Tia, Tib, but the model was output as T1a, T2a, ... Tna, T1b, T2b... Tnb. In this case if the search window is only small, then no pairs may be found at all.

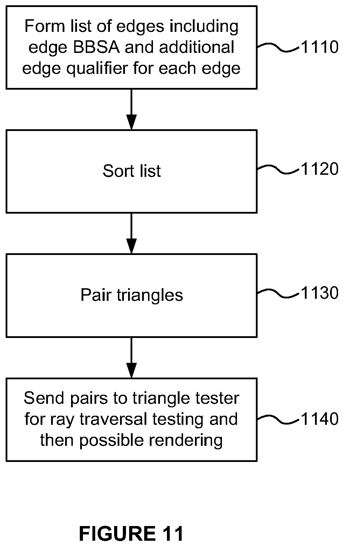

To improve on the above, the triangle pairer 220 of the present disclosure is configured to perform a method as shown in the flow chart of Figure 11.

At step 1100 the method comprises forming a list of the individual edges of the triangles in the received mesh. The triangle pairer 210 receives the mesh (from the application 110 on the CPU 902 via the API and driver) in the form of a list of vertex indices along with their vertex coordinates. The vertex coordinates are the actual coordinates of the vertices referenced by the list of indices. Then, using these two lists, the pairer 210 constructs the half-edge table. This step comprises forming a list with an individual entry for each edge, where each entry comprises at least the bounding box surface area (BBSA) of the respective edge, and an additional qualifier of the respective edge. This may be referred to herein as the input list (as it will form an input to the sorting step, to be discussed shortly).

The edge BBSA is the surface area that a bounding box (e.g. AABB) would have if formed around the individual edge, i.e. the 3D box that would have the vertices of the edge at its opposing corners. See again Figure 5b for an example. More generally other forms of bounding volume around each edge could be used, such as a sphere, or a polyhedron other than a cuboid. Preferably the same form of shape is used as for the bounding volumes in the BVH. By way of illustration the disclosure herein may be described in terms of bounding boxes and bounding box surface areas for edges and primitives, but more generally this could be replaced anywhere herein with a bounding volume and bounding volume surface area (BVSA).

The edge qualifier may be any additional property of the edges which assists in identifying or disambiguating which edges are adjoining edges and which, on the other hand, simply happen to have the same edge BBSA. In other words it assists in determining whether, for two triangles A, B with edges [A1, A2, A3] and [B1, B2, B3] respectively, where A1 and B2 (say) have the same BBSA, are edges A1 and B2 the same geometric edge (same "full edge") or are they in fact edges of disjoint triangles that merely happen to have the same edge BBSA. The edge qualifier could also be called an edge identifier, or an identifying qualifier of each edge. In the preferred example as illustrated the edge qualifier consists of an index of each of the first and second vertices of the respective edge. However as will be discussed later, other unique or non-unique qualifiers could be used, e.g. vertex coordinates, edge midpoint coordinates or a hash of the vertex or midpoint coordinates of the respective edge.

Note: in the above-described scenario the triangle pairer 210 receives a list of vertices from the application 110 and uses it to form a list of edges (the input list). However it is not excluded that in other implementations, the application 110 could provide the list of edges and then the pairer just adds the BBSAs (and any other required qualifier not already present). As a generalization it may be said that the pairer 210 (or the method performed thereby) obtains an input list of edges, where obtaining could comprises receiving a list of edges or receiving a list of vertices and forming the list of edges, or any other means of determining a list of the edges in the mesh.

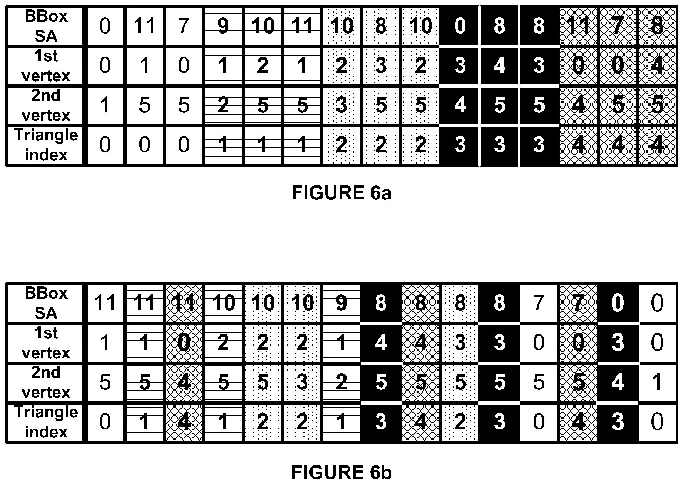

Figure 6a gives an example of the input list for a simple example mesh of five triangles of index 0-4, where each column corresponds to a different entry for a respective edge. Figure 6a also includes the BBSAs determined by the pairer 210. It will be appreciated that in practice the list would likely comprise the edges of many more triangles, but the example shown is just for illustrative purposes. The input list may be generated in a form sorted by triangle index, as shown in Figure 6a. In the figures white entries represent edges of triangle 0, horizontally hatched entries represent edges of triangle 1, dotted entries represent edges of triangle 2, black entries represent edges of triangle 3, and cross-hatched entries represent edges of triangle 4.

The list includes a respective entry for each of all three edges of each of the plurality of triangles in the mesh being processed. So if two triangles A, B have edges [A1, A2, A3] and [B1, B2, B3] respectively and A1 and B2 are shared, adjoining edges, then the list still includes a separate entry for each of A1 and B2 (as well as each of the other edges) even though A1 and B2 may be thought of as the same edge geometrically speaking. In other words the edges in the list are "half edges". A full edge refers to an edge shared between adjoining triangles. A half edge refers to an edge of a given triangle taken in isolation. In other words two adjoining triangles each have a half edge which adjoins with the other edge in the pair (e.g. edges A1 & B2 in the above example). When considered as individual edges that adjoin with one another, they may be described as half edges. When considered as forming the same shared edge them may be described together as a full edge (so continuing the example, half edges A1 and B2 are the same full edge - what has been described previously as a geometric edge). "Full edge" and "half edge" are terms of art in the fields of computer graphics, computational geometry and mesh processing.

A complete description of an edge also comprises not only the vertices, but also a direction in order to define which side is the inside and which side is outside the edge. The directions may be described as clockwise or anticlockwise. When a full edge is split, one goes clockwise and the other goes anticlockwise. The direction is not needed as part of the input list for the present purposes.

At step 1120 the method comprises sorting the edges in the input list. The sort comprises sorting by two hierarchical sort degrees: first by bounding box surface area, then by edge qualifier. Where it is said herein "sort by X then by Y" or the like, this means sorting by X as a primary sort key and by Y as a secondary sort key ("then" in this particular context is not being used in a chronological sense, i.e. it doesn't necessarily mean that all the sorting by X must be completed before, temporally speaking, any sorting by Y can commence, though that would be one possible way to do it). So edge BBSA (bounding box surface area) is the primary sort key, and the edge qualifier is the secondary sort key. Where two or more variables are used to make up the edge qualifier, e.g. first vertex index and second vertex index as in the example shown, or vertex or midpoint coordinates in other examples, these form sub keys of the secondary sort key. So in the example shown, the list is sorted first by BBSA, then by first vertex index, then by second vertex index. In other words, the entries in the list (representing the respective edges) are sorted by the edge BBSA (primary sort key), and where there are entries with the same edge BBSA, those entries are sorted among themselves by edge qualifier (secondary sort key). If the edge qualifier comprises two sub keys (e.g. 1^{st} and 2^{nd} vertex), then among the entries with the same BBSA, those entries are first sorted by first sub key (e.g. 1^{st} vertex), and then if there are any with the same BBSA and same first sub key, those are sorted among themselves by second sub key (e.g.2^{nd} vertex), etc.. Put another way, the edge qualifier acts as a "tie breaker" for sorting among entries with the same edge BBSA. And if the edge qualifier consists of two (or more) sub keys such as 1^{st} and 2^{nd} vertex, then 2^{nd} vertex (or subkey) is used as a tie breaker to sort among any entries with the same BBSA and same 1^{st} vertex (or subkey). E.g. comparing Xs gives 3 cases: X1<X2, X1>X2 or in the case of a tie, i.e. X1==X2, compare Y1 & Y2.

Figure 6b shows a sorted list of (half) edges, sorted from the input list of Figure 6a, sorting by edge BBSA, then by first vertex index, then by second vertex index (i.e. by edge BBSA as primary sort key, 1^{st} vertex index as first secondary sort sub key, and by 2^{nd} vertex index as second secondary sort key). In this example the first vertex index is always the one that's lowest in the index order, and the second is always the one that is highest. I.e. the method checks and swaps indices if needed so that first index is always smaller than the second index. This is so that one edge doesn't get listed as, say, 1-5 and the other 5-1 and so a match gets missed. One can assume the indices are distinct because if the indices were identical, and the associated triangle(s) can be discarded as they are degenerate and have no physical area.

The sort may be a lexicographical sort. The sorting algorithm may be e.g. a radix sort or a bitonic sort. The sort may be a full sort (i.e. complete sort) or a rough sort (sometimes also called nearly-sorted). A full sort, though more time consuming, will produce a better quality list of pairs on average.

The method thus produces a sorted list having a sorted order from: A) at a top of the list, an entry representing the edge with i) greatest edge BBSA, and ii) from among any with the same edge BBSA as the edge at the top of the list, a first-most value of the edge qualifier according to the sorted order; to B) at a bottom of the list, an entry representing the edge with i) the lowest BBSA, and ii) from among any with the same edge BBSA as the edge at the bottom of the list, a last-most value of the edge qualifier according to the sorted order.

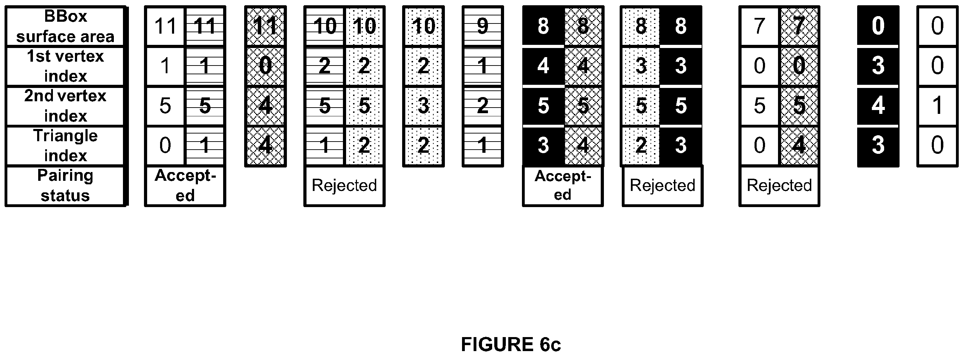

At step 1130, the method then identifies pairs of triangles based on the sorted list of edges. This is illustrated by way of example in Figure 6c, continuing on from the example of Figures 6a and 6b. This step operates as follows. From the sorted list of (half) edges, the method looks for edges that have the same BB surface area as one another (and therefore likely candidates for being adjoining edges), and from among those checks for edges that are indeed adjoining by checking their vertices (or more generally the edge qualifier).

To do this, the method traverses the list from top to bottom (left to right in the way presented on the page); i.e. starting with the entry with the highest BBSA (and from among any that have the same BBSA, that with the first-most qualifier value according to the sorted order) then continuing down the list toward the entry with lowest BBSA (and among any with the same BBSA, that with the last-most qualifier value according to the sorted order). For each edge encountered as traversing down the list that has the next edge with matching BB surface area and vertices, the method matches those edges. If both the edges belong to triangles that haven't been paired yet (and aren't edges of the same triangle), the method pairs the triangles. See again the example of Figure 6c.

I.e. the method compares adjacent entries (columns as presented on the page in Fig 6c) to determine whether they are a shared edge, and if so accept the pair and pair their triangles, except if one of the triangles is already paired, in which case it is rejected. The sorting by 1st & 2nd vertex (or more generally edge qualifier, e.g. midpoint or hash) acts as a "tie breaker" to make sure the matched edges really do sit next to each other (some edges in the mesh could happen to have the same BB surface area and so be adjacent in the sorted list, but not be geometrically adjacent to one another in the mesh).

At step 1140, the method outputs an indication of the paired triangles to the triangle tester 220, to be processed jointly as a pair.

In embodiments, the joint processing comprises testing them using the dual triangle tester unit (DTTU), such that each pair of triangles gets tested as a pair by the DTTU as discussed previously. Any unpaired triangles just get tested individually.

Alternatively or additionally, the joint processing may comprise including the pair of triangles in the same leaf node of the bounding volume hierarchy (BVH). Any unpaired triangles may just be included in their own individual leaf nodes.

If it is determined that a ray does intersect any given triangle, whether tested as a part of a pair or individually, the method then records the intersection any may continue to search for a closer intersection of the ray (for cases such as primary reflection or refraction) or in the case of shadow rays may finish traversal of the ray. The method may then continue to search for intersections by other rays in a similar manner (and/or searches for intersections by other rays may be performed in parallel). The eventual results are used to determine how to render a scene comprising the mesh (or part thereof) on a display device, which may comprise for example shading of pixels, as known in the art.

The inventors have found that the new pairing method results in more efficient pairing in terms of total processing cost of performing ray tracing on the mesh, compared to a simple window-based search using only the received order.

One reason relates to the bounding boxes used in the BVH. When the BVH search gets down to a leaf node bounding box in the BVH, it has to check whether the ray hits the bounding box (BB) and then if so, whether it actually hits the primitive(s) insides the box. If there is a BB hit but a primitive miss, the test has been for nothing and so that is wasted processing. If the area of the primitive is small compared to the surface area of the bounding box, then there is more of a chance of a miss and so doing a test for nothing. It is most efficient to try to fill up as much of the BBs with primitives as possible to maximize the number of hits. For instance a triangular primitive with a long diagonal edge is more likely to result in a miss. See Figure 8 by way of illustration - a ray would probably miss the bold triangle in most cases even though it intersects with its bounding box (dashed).

Furthermore, it is not just the quality of the pairings that is improved. In most models, more pairings and better pairings are observed and these both contribute to the performance. More pairings also means that BVH will occupy less space, which in turn can increase performance because of better cache utilization.

Some further variants and generalizations of the disclosed techniques are now discussed.

As mentioned, in the illustrated example the edge qualifier consists of an index of each of the first and second vertices of the respective edge. This is an example of a unique qualifier, i.e. only adjoining edges of adjoining triangles will have both the same vertices. Another example of a unique qualifier would be to use the coordinates of the two vertices of each edge rather than the vertex indices. It would also be possible to use a non-unique qualifier (or at least one that is not guaranteed to be unique) such as the midpoint coordinates of each edge, or a hash of the vertex or midpoint coordinates. Such properties would not be guaranteed to uniquely identify every edge in a mesh. For example two midpoints could coincide if edges overlap. This is unlikely but could happen, e.g. due to a modelling error. As another example, a hash would probably be unique for most edges but over a large mesh there could be one or more hash collisions. Statistically, using a non-unique edge identifier such as these may occasionally result in a very small number of non-adjacent triangles getting paired, but if the triangle tester 220 is configured to check this and simply process them separately if it is accidentally passed two non-adjacent triangles as a pair, then this is not a problem. The above has been described in terms of using the first and second vertex indices as the edge qualifier, but it will be appreciated that this is not limiting and any embodiment disclosed herein could instead use any suitable unique or non-unique identifying qualifier of an edge such as vertex coordinates, midpoint coordinates, or hash of vertex or midpoint coordinates.

As also mentioned, the sort could be a rough sort rather than a full sort. For instance it is possible to use the most significant n bits (e.g. 8 bits) of a sort key to do a radix sort which is faster. This does not sort the numbers completely, but most values will be close to their sorted positions. This does not guarantee that twin half-edges will be next to each other after sort, but this may be tolerable as the aim is only to achieve a statistical improvement in pairings overall. An advantage of such sorting would be the possibility of faster and/or simpler sorting step, at the expense of fewer and/or worse quality pairings overall.

Another possible extension is as follows. The above algorithm is purely "greedy": as it traverses the sorted list from top to bottom (starting from the edge with the biggest BB surface area), considering each target edge in turn, it just tries to match it with the next edge down in the list. If the target gets matched with its neighbour, then their triangles are paired straight away and those triangles are no longer available to be paired with any others. E.g. in the example of Figures 6a-6c, once triangles 0 and 1 have been paired based on their matching edge 1-5, then triangle 1 is no longer available to be matched with triangle 2 even though they share an edge 2-5. So this then excludes other possible pairings.

However one could instead look ahead at a larger window down the list than just the next edge in the list, and see whether there is more than one matching edge for a given triangle. E.g. in the example of Figures 6a-6c, if the algorithm were to look ahead at a window of four entries from the top of the list (five in total including the top entry), then it can see that triangles 0 and 1 have matching edges, and triangles 1 and 2 have matching edges, so either pairing could be used. The two (or more) possible pairings could then be compared to see which would be best. For example this may be done by evaluating the surface area of their joint bounding boxes, then accepting whichever pair has the greatest joint BB surface area. Other possible metrics could also potentially be used for this comparison. The surface area of the joint bounding box, for a given possible pairing, here means the surface area of the single bounding box that would fit around both triangles.

Whilst the examples above have been described in the context of triangular primitives, other forms of geometric primitive may also be used. For example, rectangular quad primitives (such as bilinear surfaces) may be used instead of, or in addition to, triangular primitives. The primitives may be any suitable tessellating shape.

Further, while the above have been described in terms of bounding boxes (i.e. cuboids) around primitives and edges, more generally any of the above-described techniques could be extended to the use of any shape of bounding volume, e.g. spheres, or tessellating or non-tessellating polyhedrons other than boxes, for bounding primitives and/or edges.

Finally, as another possible extension, the groupings of triangles could be bigger than pairs (though as the grouping become larger this is likely to give diminishing returns). In other words, as mentioned earlier, the disclosed concepts could be extended to forming small clusters adjoining triangles, each cluster comprising two or more pairs. E.g. a cluster of three triangles could comprise either: two pairs where one shared triangle is a member of both pairs, but the other two are only paired with the shared triangle; or three pairs where each triangle is a member of two pairs, each being paired with each of the other two. For instance it would be possible to cluster three or more triangles into a leaf node of a BVH for search purposes; or in the case of a cluster of three triangles forming two pairs, a dual triangle tester could be used to test a ray against seven edges instead of nine (or for a cluster of three triangles forming three pairs, six edge tests instead of nine). A cluster of three or more triangles may be found, for example, by using a search window of more than one list entry; or by using a search window of only one list entry but once a pair is found, continuing to search down the list for another matching edge from a third, as-yet unpaired triangle that matches one of the edges in the currently-found pair.

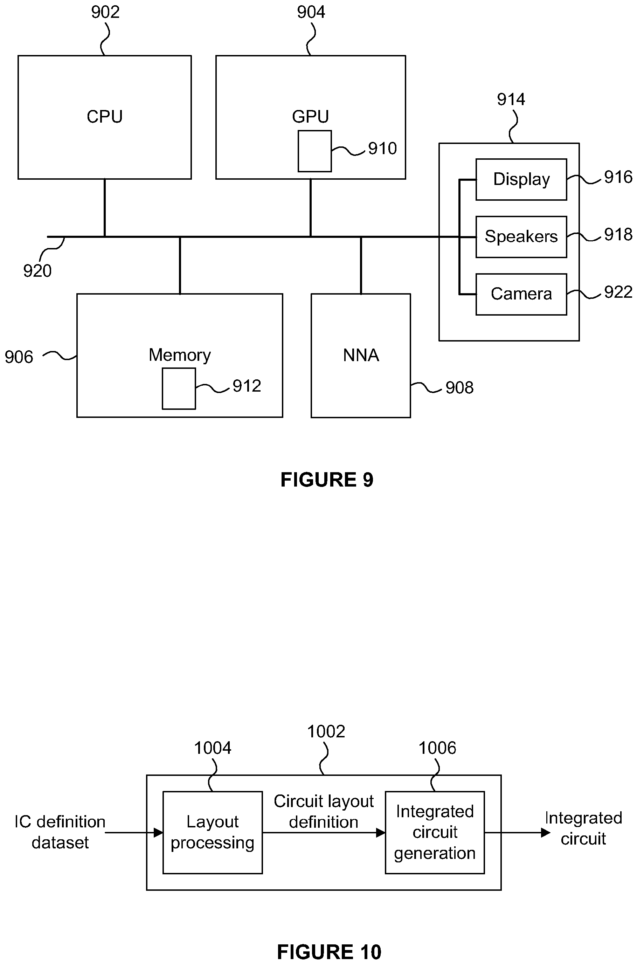

Figure 9 shows a computer system in which the graphics processing systems described herein may be implemented. The computer system comprises a CPU 902, a GPU 904, a memory 906, a neural network accelerator (NNA) 908 and other devices 914, such as a display 916, speakers 918 and a camera 922. A processing block 910 (corresponding to that of Figure 1) is implemented on the GPU 904. In other examples, one or more of the depicted components may be omitted from the system, and/or the processing block 910 may be implemented on the CPU 902 or within the NNA 908. The components of the computer system can communicate with each other via a communications bus 920. A store 912 is implemented as part of the memory 906. The store 912 may comprise code arranged to run on the CPU 902 and/or GPU 904 as appropriate to perform any of the operations disclosed herein if implemented in software. Alternatively some or all of any such code could be stored in internal memory of the CPU 902 and/or GPU 904 as applicable, or operations could be implemented in hardware, or in any combination of hardware and software stored in any suitable location.

The apparatus of Figures 12 and 9-10 are shown as comprising a number of functional blocks. This is schematic only and is not intended to define a strict division between different logic elements of such entities. Each functional block may be provided in any suitable manner. It is to be understood that intermediate values described herein as being formed by a graphics processing system need not be physically generated by the graphics processing system at any point and may merely represent logical values which conveniently describe the processing performed by the graphics processing system between its input and output.

The graphics processing systems described herein may be embodied in hardware on an integrated circuit. The graphics processing systems described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a graphics processing system configured to perform any of the methods described herein, or to manufacture a graphics processing system comprising any apparatus described herein. An integrated circuit definition dataset may be, for example, an integrated circuit description.

Therefore, there may be provided a method of manufacturing, at an integrated circuit manufacturing system, a graphics processing system as described herein. Furthermore, there may be provided an integrated circuit definition dataset that, when processed in an integrated circuit manufacturing system, causes the method of manufacturing a graphics processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a graphics processing system will now be described with respect to Figure 10.

Figure 10 shows an example of an integrated circuit (IC) manufacturing system 1002 which is configured to manufacture a graphics processing system as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a graphics processing system as described in any of the examples herein), process the IC definition dataset, and generate an IC according to the IC definition dataset (e.g. which embodies a graphics processing system as described in any of the examples herein). The processing of the IC definition dataset configures the IC manufacturing system 1002 to manufacture an integrated circuit embodying a graphics processing system as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a graphics processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 10 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 10, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method comprising:
obtaining an input list in which list entries represent edges of triangular primitives forming a mesh modelling at least part of a surface in a virtual environment, at least one of the edges of each of the triangular primitives adjoining with a respective one of the edges of another of the triangular primitives in the mesh;
determining an edge BVSA, bounding volume surface area, of each of the edges;
determining an additional edge qualifier of each of the edges;
sorting the entries in the input list by edge BVSA then by edge qualifier, thereby resulting in a sorted list in which the entries have a sorted order from an entry representing an edge with greatest edge BVSA to an entry representing an edge with lowest edge BVSA;
traversing the list in the sorted order seeking groups of matched edges within a predetermined window of list entries of one another in the sorted order, each edge in a matched group having a matching edge BVSA and matching edge qualifier with another of the edges in the matched group from a different triangular primitive, wherein each time a group of matched edges is found whose triangular primitives have not yet been designated as part of a cluster of adjoining primitives, designating the triangular primitives of the matched edges in the group of matched edges as a cluster of adjoining primitives; and
for each of the designated clusters of adjoining primitives, processing the cluster of adjoining primitives together as a group as part of a ray tracing process performed in software and/or hardware on a graphics processing unit.

2. The method of claim 1, wherein each group of matched edges is a pair of the edges, and each cluster of adjoining primitives is a pair of the triangular primitives.

3. The method of claim 1, wherein each group of matched edges is more than two of the edges, and each designated cluster is more than two of the triangular primitives.

4. The method of any preceding claim, wherein the sorted order is from an entry at the top of list representing an edge with greatest edge BVSA to edge at the bottom of list representing an edge with lowest edge BVSA; and the traversing comprises traversing the sorted list from the top entry to the bottom entry, and for each as-yet unmatched edge currently-encountered in the traversing of the list, determining whether there exists another edge within the predetermined window of list entries down the sorted order that has matching edge BVSA and matching edge qualifier, and which is not from the same triangular primitive as the currently-encountered edge and which is not-yet matched as part of one of the matched groups, and if so matching the currently-encountered edge to the other edge to the other edge as one of the matched groups or part of one of the matched groups.

5. The method of any preceding claim, wherein the predetermined window is the next entry down sorted list in the sorted order.

6. The method of any of claims 1 to 4, wherein
the predetermined window is larger than one list entry; and
the method further comprises, when a number of candidate matching edges is found within the predetermined window that is greater than a maximum membership for a matched group, performing a comparison to select among said greater number of candidate matching edges to include in one of the matched groups, the comparison comprising:
- for each of a plurality of candidate subsets of said greater number of matching edges, determining a joint BVSA of the edges in the candidate subset, and
- selecting, as said one of the matched groups, the subset with the lowest total edge BVSA.

7. The method of any preceding claim, wherein the edge qualifier is unique to any given pair of adjoining pair edges.

8. The method of claim 7, wherein the edge qualifier of each edge comprises an identifier of a first vertex of the edge and an identifier of the second vertex of the edge, and the sorting by edge qualifier comprises sorting by first vertex identifier then by second vertex identifier, the edge qualifiers matching when both the first and second vertex identifiers match.

9. The method of any of claims 1 to 6, wherein the edge qualifier of each edge is coordinates of a midpoint of the edge, or a hash of coordinates of the midpoint or vertices of the edge.

10. The method of any preceding claim, wherein for each designated cluster, the processing of the adjoining primitives together comprises one of:
- using a dual triangle tester (220) to test whether a ray intersects with each of the triangular primitives in the cluster, wherein the dual triangle tester uses an at-least-partially shared calculation to determine which side of an adjoining edge a ray falls; or
- including the triangular primitives of the designated cluster in a same leaf node (206) of a bounding volume hierarchy (200) searched to determine whether a ray intersects with any of the triangular primitives in the cluster; or
- in a buffer while awaiting testing against a ray, storing the cluster in a compressed form compared to storing the triangular primitives individually.

11. The method of any preceding claim, comprising causing the modelled environment to be rendered on a display device (916), including illumination based on the ray tracing.

12. A graphics processing system comprising, implemented in ether fixed-function hardware circuitry, configurable or reconfigurable hardware circuitry, or software stored on one or more memory units and arranged to run on one or more processing units, or any combination of hardware and software:
an edge sorting module configured to:
obtain an input list in which list entries represent edges of triangular primitives forming a mesh modelling at least part of a surface in a virtual environment, at least one of the edges of each of the triangular primitives adjoining with a respective one of the edges of another of the triangular primitives in the mesh;
determine an edge BVSA, bounding volume surface area, of each of the edges;
determine an additional edge qualifier of each of the edges; and
sort the entries in the input list by edge BVSA then by edge qualifier, thereby resulting in a sorted list in which the entries have a sorted order from an entry representing an edge with greatest edge BVSA to an entry representing an edge with lowest edge BVSA;
a triangle pairing module (210) configured to traverse the list in the sorted order seeking groups of matched edges within a predetermined window of list entries of one another in the sorted order, each edge in a matched group having a matching edge BVSA and matching edge qualifier with another of the edges in the matched group from a different triangular primitive, wherein each time a group of matched edges is found whose triangular primitives have not yet been designated as part of a cluster of adjoining primitives, designate the triangular primitives of the matched edges in the group of matched edges as a cluster of adjoining primitives; and
one or more graphics processing modules configured to, for each of the designated clusters of adjoining primitives, process the cluster of adjoining primitives together as a group as part of a ray tracing process performed in software and/or hardware on a graphics processing unit (904).

13. A graphics processing system (910) configured to perform the method of any of claims 1 to 11.

14. Computer readable code configured to cause the method of any of claims 1 to 12 to be performed when the code is run.

15. An integrated circuit definition dataset that, when processed in an integrated circuit manufacturing system (1002), configures the integrated circuit manufacturing system to manufacture a graphics processing system as claimed in claim 13.
